# EUROPÄISCHE PATENTSCHRIFT

(11) **EP 2 125 407 B1**
(45) Veröffentlichungstag und Bekanntmachung des Hinweises auf die Patenterteilung: **20.04.2011**
(21) Anmeldenummer: 08707538.8
(22) Anmeldetag: 04.02.2008
(51) Int. Cl.: B60J 5/04

(54) **DOPPELDICHTLIPPE FÜR TÜRMODUL EINER FAHRZEUGTÜR**
DOUBLE SEALING LIP FOR DOOR MODULE OF A VEHICLE DOOR
DOUBLE LÈVRE D'ÉTANCHÉITÉ POUR MODULE DE PORTE DE VÉHICULE

(30) Priorität: 16.02.2007 DE 202007002572 U
(43) Veröffentlichungstag der Anmeldung: 02.12.2009
(73) Patentinhaber: Wirthwein AG, 97993 Creglingen (DE)
(72) Erfinder: WIRTHWEIN, Marcus, 97993 Creglingen (DE); KIRCHNER, Gerhard, 97702 Münnerstadt (DE)
(74) Vertreter: Wablat, Wolfgang
(86) Internationale Anmeldenummer: PCT/EP2008/000866
(87) Internationale Veröffentlichungsnummer: WO 2008/098696

(56) Entgegenhaltungen:
- EP-A- 1 685 993
- DE-A1-102004 011 136
- DE-A1-102004 053 622
- US-A1- 2003 019 161

## Beschreibung

Die Erfindung bezieht sich auf eine Fahrzeugtür mit einer durch ein Türmodul in einen Nassraum und einen Trockenraum getrennten Türkarosserie, wobei der Nassraum von der Türaußenhaut und vom Türmodul und der Trockenraum vom Türmodul und von der Türinnenverkleidung begrenzt sind und das Türmodul mindestens eine, eine Montageöffnung umgebende Doppeldichtlippe aus Weichkunststoff umfasst, die den Trockenraum doppelt eggen die Türaußenhaut abschließt.

Es sind Fahrzeugtüren in Schalenbauweise bekannt, die aus einem Innen- und einem Außenblech bestehen und bei denen das Innenblech auf der Innenseite großflächig ausgespart ist. Diese Aussparung ist mit einer Türinnenverkleidung abgedeckt. Da nicht ausgeschlossen werden kann, dass entlang der Seitenscheibe etwas Wasser in den Türinnenraum eindringt, muss die Türinnenverkleidung am Innenblech abgedichtet angebracht sein, damit dieses Wasser nicht in den Fahrgastraum gelangen kann.

Aus DE 101 33 420 A1 ist eine Türdichtung bekannt, die zwischen der Türinnenverkleidung und der angrenzenden Karosserie angeordnet ist, so dass diese den Fahrzeuginnenraum unmittelbar gegen den Fahrzeugaußenraum abdichtet, wobei im unteren Bereich der Fahrzeugtür wenigstens eine Ablauföffnung vorgesehen ist, durch die sich im Innenraum der Fahrzeugtür ansammelndes Wasser direkt nach der Fahrzeugaußenseite ablaufen kann. Dabei erfolgt die gesamte Abdichtung gegen Staub und Wasser an der Türdichtung zwischen Türinnenverkleidung und Karosserie. Damit soll auf eine zweite Türdichtung außerhalb der Dichtung zur Türinnenverkleidung verzichtet werden.

Derartige Fahrzeugtüren, die über keine Trennung zwischen dem Nass- und dem Trockenraum verfügen, werden meist mit elektrischen Aggregaten und elektrischen Steckverbindern in sogenannter Nassraumausführung ausgerüstet, die im Vergleich zur Trockenraumausführung höhere Kosten verursacht.

In DE 199 54 648 A1 wird eine Lösung vorgeschlagen, bei der eine die Trennung zwischen Nass- und Trockenraum der Fahrzeugtür bildende Türinnerlhaut und/oder ein entsprechendes Türinnenmodul als Geräteträger aus Kunststoff wenigstens ein luftdurchlässiges Druckausgleichselement aufweist. Dieses Druckausgleichselement ist luftdurchlässig und in die Gegenrichtung für Wasser und Staub undurchlässig.

Das Druckausgleichselement kann auch Bestandteil einer als Dichtungselement vorgesehenen Schaumfolie sein, die vorzugsweise von der Seite des Trockenraums auf einen mechanischen Träger aufgebracht ist und so die eigentliche Trennung zwischen dem Nass- und dem Trockenraum bildet. Das Druckausgleichselement kann in die Türinnenverkleidung integriert sein, um eine Öffnung zwischen dem Nassraum und dem Trockenraum zu verschließen. Die Öffnung kann zugleich zur Trennung zwischen Nass- und Trockenraum mit einer dazwischen liegenden elastischen Dichtung umschlossen sein. Diese Bauweise ist relativ aufwändig und bedingt für ihre Funktion einen stets exakten Sitz der Dichtung.

Aus DE 10 2004 053 622 A ist eine Fahrzeugtür bekannt, die als Türmodul für ein Kraftfahrzeug einen Modul-/Geräteträger aus Kunststoff mit einer Lautsprecheröffnung umfasst. Längs des umlaufenden Randes der Lautsprecheröffnung weist das Türmodul jeweils in sich geschlossenen strangförmige Komponenten aus einem thermoplastischen Elastomer auf, die als Dichtungen zur Abdichtung des Türmoduls gegen das Innenblech, an dem das Türmodul mit seinem Rand anliegend zu montieren ist, sowie zur Abdichtung gegen den in der Lautsprecheröffnung zu montierenden Lautsprecher und gegen den Motor für den Fensterheber und andere Komponenten des Fensterhebers dienen.

Nachteilig hierbei ist, dass das thermoplastische Elastomer durch eine Extrusionsdüse extrudiert wird, während die Extrusionsdüse an der Oberfläche des Modulträgers entlang geführt wird, wodurch das thermoplastische Elastomer die strangförmige Komponente bildet, ohne in eine formgebende Kavität gezwungen zu werden, wodurch zugleich eine Verbindung der strangförmigen Komponente mit dem Modulträger zustande kommt. Die Extrusionsdüse wird dabei von einem Roboter gehalten und durch diesen automatische längs einer in sich geschlossenen Bahn über den Modulträger geführt.

Der Erfindung liegt von daher die Aufgabe zugrunde, ein preiswertes Türmodul schaffen, bei dem diese Nachteile nicht mehr auftreten.

Zur Lösung dieser Aufgabe sieht die Erfindung vor, dass die Doppeldichtlippe aus Weichkunststoff integral angespritzter Bestandteil des Türmoduls aus Kunststoff ist und innerhalb einer um die Öffnung umlaufenden Rille des Türmoduls aus Kunststoff angespritzt ist, dass die beiden Lippen der Doppeldichtlippe sich aus dem Tormodul aus Kunststoff in einem Spritzgusswerkzeug im Bereich an einer passen Stelle durchstoßen und die mit ihren beiden Lippen angespritzte Doppeldichtlippe in einem Kernwerkzeug ausgeformt ist. Damit wird ein preiswertes Türmodul mit der Doppeldichtlippe als Bestandteil des Türmoduls in einem Arbeitsgang ausgeformt, wobei das Spritzgusswerkzeug zur Herstellung des Türmoduls aus Kunststoff zusammen mit dem Kernwerkzeug zur Herstellung der Doppeldichtlippe in einem Arbeitsgang hergestellt wird. Eine besondere Vorrichtung, wie ein Roboter zur Ausbildung der Doppeldichtlippe mittels des Extrusionsverfahrens, ist dabei nicht mehr erforderlich.

Die Erfindung umfasst somit eine Fahrzeugtür mit einer durch eine Trennung zwischen dem Nass- und dem Trockenraum in einen Nassraum und einen Trockenraum getrennten Türkarosserie, wobei der Nassraum einerseits von der Türaußenhaut und andererseits von dem Türmodul begrenzt ist, und der Trockenraum sich an die Trennung von Nass- und Trockenraum in Richtung der Türinnenverkleidung anschließt und die Trennung zwischen dem Nass- und dem Trockenraum durch mindestens eine an dem Türmodul angeordnete Doppeldichtlippe aus Weichkunststoff, die den Trockenraum doppelt gegen die Türaußenhaut abschließt. Die Erfindung umfasst auch ein vorgefertigtes Türmodul mit Doppeldichtlippe für derartige Fahrzeugtüren.

Mit der Doppeldichtlippe, bei der sich beide Lippen gegen dasselbe Bauteil anlegen bzw. gegen das der Trockenraum abzudichten ist, ist sichergestellt, dass bei der Montage und / oder bei Materialtoleranzen auf jeden Fall eine der beiden Lippen anliegt und dichthält. In der Praxis war häufiger festzustellen, dass sich eine Dichtlippe umlegen kann und nicht mehr dichtet.

Die Doppeldichtlippe besteht aus Weichkunststoff, das Türmodul ansonsten aus ausgewähltem, der Funktion angepassten Kunststoff. Zumindest von Seiten des Nassraums in Richtung des Trockenraums ist der Weichkunststoff so ausgewählt, dass er für Wasser und Staub undurchlässig ist.

Für die Vorfertigung ist es sinnvoll, dass die Doppeldichtlippe aus Welchkunststoff Bestandteil des Türmoduls ist. Erfindungsgemäß ist die Doppeldichtlippe aus Weichkunststoff integral angespritzter Bestandtell des vorgefertigten Türmoduls.

Es kann auch vorgesehen werden, dass die Doppeldichtlippe gegen die Türinnenseite abdichtet oder ganze Bereiche, in denen Funktionsteile des Fahrzeugs in der Türverkleidung anzuordnen sind, gemeinsam abdichtet.

Die erfindungsgemäße Fahrzeugtür mit einer durch ein Türmodul aus Kunststoff in einen Nassraum und einen Trockenraum getrennten Türkarosserie und mit einer Doppeldichtlippe wird nachfolgend anhand eines Ausführungsbeispiels und den dargestellten Figuren näher erläutert: Es zeigt:
Fig. 1 eine perspektivische Explosionsdarstellung der Fahrzeugtür mit einer Fahrzeugtüraußenseite, mit einem Türmodul aus Kunststoff als Gerätträger und mit einer Türinnenverkleidung und
Fig. 2 einen Schnitt durch einen Abschnitt des Türmoduls im Bereich der Doppeldichtlippe.

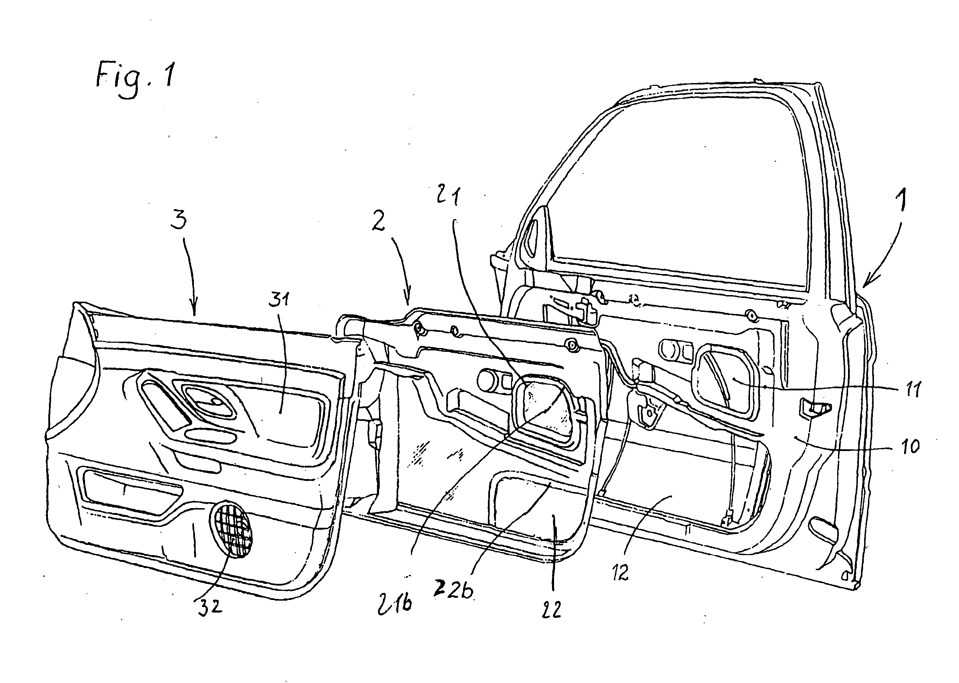

Die In Fig. 1 dargestellte Türkarosserie 1 umfasst eine Außenhaut 10, die Montageöffnungen 11 zum Einbau von Funktionselemente wie Fensterheber und Türschloss sowie eine Öffnung 12 für einen Lautsprecher 32 aufweist. Als Trennung zwischen einem Nass- und einem Trockenraum ist ein luft- und wasserundurchlässiges Türmodul 2 aus Kunststoff mit zwei partiell angespritzten Doppeldichtlippenbereichen 21, 22 vorgesehen, wobei die oberen Doppeldichtlippenbereiche 21 b die Montageöffnung 11 umranden, während die unteren Doppeldichtlippenbereiche 22b die Montageöffnung 12 umschließen, um den an der Türinnenverkleidung 3 montierten Lautsprecher 32 aufnehmen zu können. Ein Abschnitt 31 der Innenverkleidung 3 verdeckt dann den eingebauten Fensterheber.

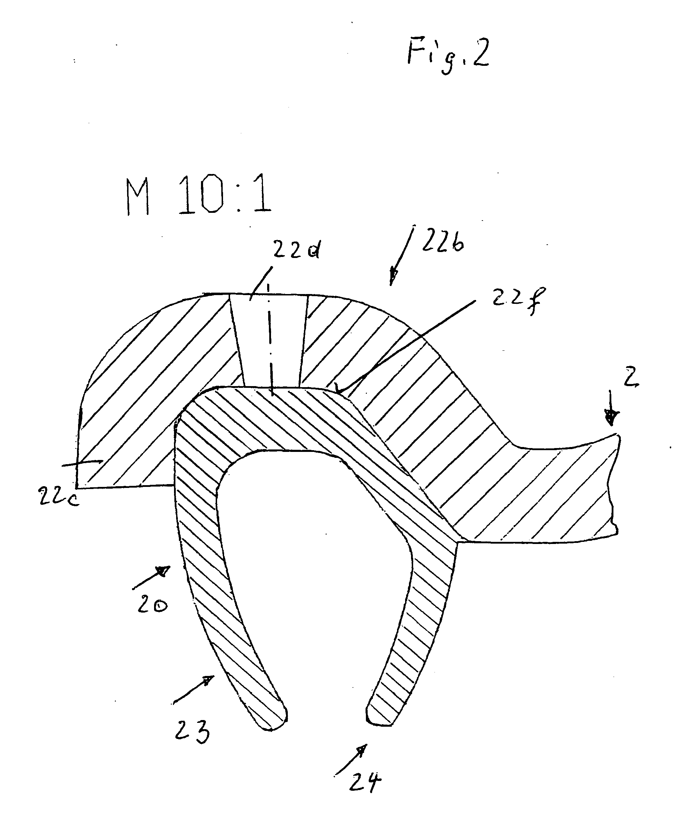

Die Fig. 2 zeigt im Meßstab 10:1 einen Schnitt durch die Doppeldichtlippe 20, die in einer um die Öffnung 12 im Geräteträger 2 umlaufende Rille 22f im Bereich 22b kurz vor dessen Rand 22c so angespritzt ist, dass sich zwei Lippen 23, 24, die etwa 5 mm lang und 1 mm dick sind, aus dem Geräteträger 2 in Richtung zur Türkarosserie 1 erstrecken. Dazu wird der Geräteträger 2 im Spritzgusswerkzeug durch den Geräteträger 2 im Bereich 22b an einer passenden Stelle 22d durchstoßen und angespritzt. Das erforderliche Kernwerkzeug zur Ausformung der Doppeldichtlippe ist nicht dargestellt.

Wenn der Geräteträger 2 nun in die Türkarosserie 1 eingesetzt wird, ist sichergestellt, dass mindestens eine der beiden Dichtlippen 23, 24 die Karosserie gegen den Geräteträger wasserdicht abschließt und so den Raum z.B. für den Lautsprecher 12, 22 trocken hält, auch wenn von einer Fensterscheibe außen oder innen Wasser perlt.

## Patentansprüche

1. Fahrzeugtür mit einer durch ein Türmodul (2) aus Kunststoff in einen Nassraum und einen Trockenraum getrennten Türkarosserie (1), wobei der Nassraum von der Türaußenhaut (10) und vom Türmodul (2) und der Trockenraum vom Türmodul (2) und von der Türinnenverkleidung (3) begrenzt sind und das Türmodul (2) mindestens eine, eine Montageöffnung (12) umgebende Doppeldichtlippe (20) aus Weichkunststoff umfasst, die den Trockenraum doppelt gegen die Türaußenhaut (10) abschließt,
**dadurch gekennzeichnet,**
**dass** die Doppeldichtlippe (20, 23, 24) aus Weichkunststoff integral angespritzter Bestandteil des Türmoduls (2) aus Kunststoff ist und innerhalb einer um die Öffnung (12) umlaufenden Rille (22f) des Türmoduls (2) aus Kunststoff angespritzt ist,
**dass** die beiden Lippen (23, 24) der Doppeldichtlippe (20) sich aus dem Türmodul (2) in Richtung der Türaußenhaut (10) erstrecken, dass der Türmodul (2) aus Kunststoff in einem Spritzgusswerkzeug im Bereich (22b) an einer passenden Stelle (22d) durchstoßen und die mit ihren beiden Lippen (23, 24) angespritzte Doppeldichtlippe (20) in einem Kernwerkzeug ausgeformt ist.

## Claims

1. Vehicle door with a door body (1) separated by a door module (2) of plastic into a wet space and a dry space, wherein the wet space is delimited by the outer door covering (10) and by the door module (2) and the dry space is delimited by the door module (2) and the interior door panelling (3) and the door module (2) comprises at least one double sealing lip (20) of soft plastic, surrounding a mounting opening (12), which sealing lip seals the dry space in a double manner against the door outer covering (10),
**characterized in that**
the double sealing lip (20, 23, 24) of soft plastic is an integrally injected-on component of the door module (2) of plastic and is injected on within a groove (22f), surrounding the opening (12), of the door module (2) of plastic,
that the two lips (23, 24) of the double sealing lip (20) extend from the door module (2) in the direction of the outer door covering (10), that the door module (2) of plastic is perforated in an injection moulding tool in the region (22b) at an appropriate site (22d) and the double sealing lip (20), injected-on with its two lips (23, 24), is formed in a core tool.

## Revendications

1. Porte de véhicule comprenant une carrosserie de porte (1) séparée par un module de porte (2) en matière synthétique en un espace humide et un espace sec, l'espace humide étant délimité par l'enveloppe extérieure de porte (10) et par le module de porte (2) et l'espace sec par le module de porte (2) et par l'habillage intérieur de porte (3) et le module de porte (2) comprenant au moins une double lèvre d'étanchéité (20) entourant une ouverture de montage (12) à base de matière synthétique souple, qui ferme l'espace sec de façon double par rapport à l'enveloppe extérieure de porte (10),
**caractérisée en ce que**
la double lèvre d'étanchéité (20, 23, 24) est un composant, formé par projection à base de matière synthétique souple, du module de porte (2) à base de matière synthétique et est formée par projection à l'intérieur d'une nervure (22f), tournant autour de l'ouverture (12), du module de porte (2) en matière synthétique,
**en ce que** les deux lèvres (23, 24) de la double lèvre d'étanchéité (20) s'étendent à partir du module de porte (2) en direction de l'enveloppe extérieure de porte (10), **en ce que** le module de porte (2) en matière synthétique est traversé dans un outil de moulage par projection dans la zone (22b) en un point (22d) adapté et la double lèvre d'étanchéité (20) formée par projection avec ses deux lèvres (23, 24) est formée dans un outil central.
